# FASCICULE DE BREVET EUROPEEN

(11) **EP 3 610 136 B1**
(45) Date de publication et mention de la délivrance du brevet: **21.04.2021**
(21) Numéro de dépôt: 18729736.1
(22) Date de dépôt: 17.05.2018
(51) Int. Cl.: F01D 21/00, F01D 25/16, F02C 7/06, F16C 27/04

(54) **DISPOSITIF POUR LE CENTRAGE ET LE GUIDAGE EN ROTATION D'UN ARBRE DE TURBOMACHINE COMPORTANT DES MOYENS DE RÉTENTION AXIALE DE BAGUE EXTÉRIEURE DE PALIER**
VORRICHTUNG ZUM ZENTRIEREN UND DREHFÜHREN EINER TURBOMASCHINENWELLE MIT MITTEL ZUR AXIALEN RÜCKHALTUNG DES AUSSENRINGES EINES LAGERS
DEVICE FOR CENTRING AND ROTATIONALLY GUIDING A TURBOMACHINE SHAFT COMPRISING MEANS FOR AN AXIAL RETENTION OF OUTER RING OF A BEARING

(30) Priorité: 18.05.2017 FR 1754412
(43) Date de publication de la demande: 19.02.2020
(73) Titulaire: Safran Aircraft Engines, 75015 Paris (FR)
(72) Inventeur: BESSY, Arnaud, 77550 Moissy-Cramayel (FR); LEEDER, Laurent, 77550 Moissy-Cramayel (FR)
(74) Mandataire: Brevalex
(86) Numéro de dépôt international: PCT/FR2018/051192
(87) Numéro de publication internationale: WO 2018/211224

(56) Documents cités:
- EP-A2- 1 630 357
- WO-A1-2015/079156
- FR-A1- 2 960 907

## Description

### DOMAINE TECHNIQUE

La présente invention se rapporte au domaine des turbomachines, et concerne plus particulièrement un dispositif pour le centrage et le guidage en rotation d'un arbre de turbomachine, comprenant un palier du type couramment appelé « palier à bague souple ». Dans un palier de ce type, les moyens de raccordement de la bague extérieure du palier au support de palier comprennent une bride de fixation montée sur le support de palier et des moyens élastiquement déformables reliant la bague extérieure du palier à la bride de fixation. L'invention est notamment applicable aux paliers amortis au moyen d'un film d'huile, également dénommé *« squeeze film »* en anglais.

L'invention s'applique à tout type de turbomachines terrestres ou aéronautiques, et notamment aux turbomachines d'aéronef telles que les turboréacteurs et les turbopropulseurs. Plus préférentiellement, l'invention peut s'appliquer à un turboréacteur double corps et double flux.

### ÉTAT DE LA TECHNIQUE ANTÉRIEURE

Dans une turbomachine, la survenue d'un évènement comme la perte d'une aube de soufflante ou le grippage d'un palier par manque d'huile induit des efforts très importants sur les paliers de la turbomachine.

De tels efforts peuvent entraîner une rupture des moyens élastiquement déformables reliant la bague extérieure d'un palier de type « souple » à la bride assurant la fixation du palier sur le support de palier. Ces moyens élastiquement déformables sont en général constitués d'une partie couramment dénommée « cage souple » ou « cage d'écureuil ».

Lors de leur rupture, les moyens élastiquement déformables cessent d'assurer le maintien en place de la bague du palier, que ce soit axialement ou tangentiellement. Si des moyens appropriés ne sont pas prévus, la fonction roulement n'est plus assurée, ce qui entraîne une dégradation rapide du palier et des pièces environnantes. Le palier ne peut alors plus assurer le fonctionnement du moteur, notamment en phase d'autorotation ou *« windmilling ».*

Pour permettre d'assurer la retenue axiale de la bague extérieure du palier par rapport au support du palier même lorsque les moyens élastiquement déformables qui raccordent la bague extérieure du palier au support de palier sont rompus, différentes solutions ont été proposées.

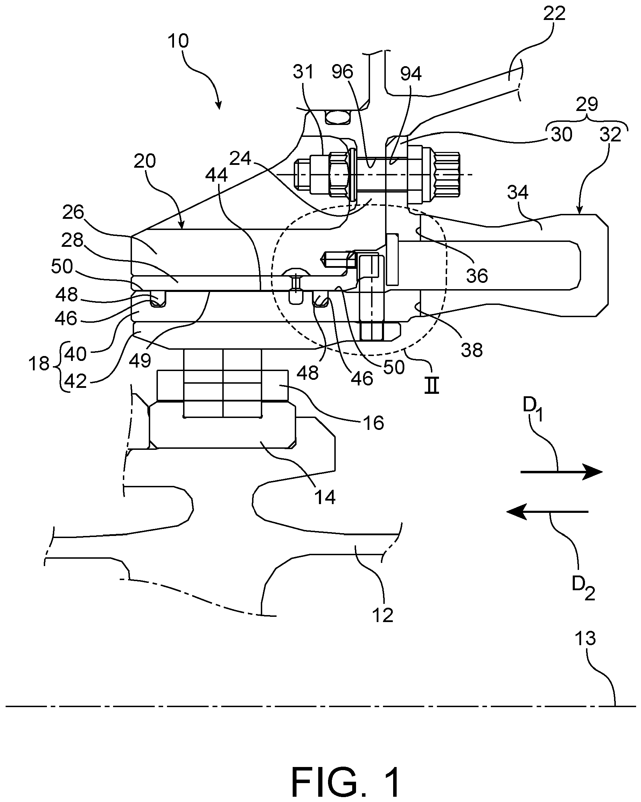

Une de ces solutions connues est illustrée en référence aux figures 1, 2 et 3, représentant une partie d'un dispositif 10 de centrage et de guidage en rotation d'un arbre 12 dans une turbomachine d'axe de révolution 13, divulgué par le document WO 2015/079156.

Ce dispositif 10 comprend un palier formé d'une bague intérieure 14 solidaire de l'arbre 12, un roulement 16, et une bague extérieure 18 solidaire d'un support de palier 20 de forme globalement annulaire. Ce support de palier 20 comporte une paroi tronconique 22 destinée à être raccordée à un carter de la turbomachine ou à un autre support de palier s'étendant coaxialement à l'arbre 12, une bride annulaire 24 s'étendant radialement vers l'intérieur depuis une extrémité amont de la paroi tronconique 22, et une partie amont 26 cylindrique de révolution s'étendant vers l'amont depuis une extrémité radialement interne de la bride annulaire 24. De plus, le dispositif 10 comporte une frette 28 montée serrée dans la partie amont 26 du support de palier 20.

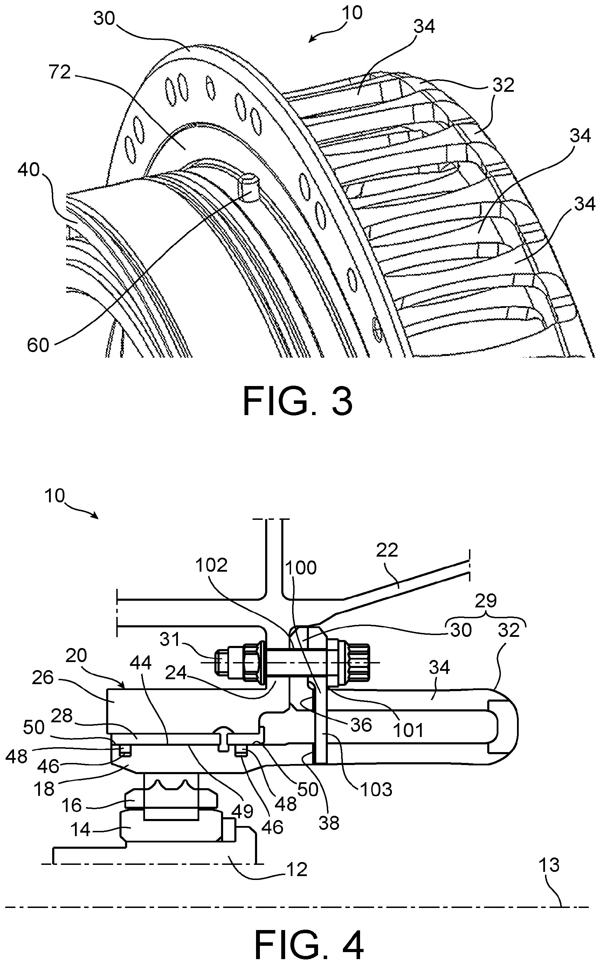

Le dispositif 10 comporte en outre des moyens 29 de raccordement de la bague extérieure 18 au support de palier 20. Ces moyens comportent une bride de fixation 30 annulaire fixée, par exemple au moyen de boulons 31, sur la bride annulaire 24 du support de palier, et des moyens élastiquement déformables 32 constitués d'une rangée annulaire, ou en variante de deux rangées annulaires comme représenté sur la figure 3, de languettes ou « colonnettes » 34 en forme de U ouvert vers l'amont, formant un ensemble du type couramment dénommé « cage souple » ou « cage d'écureuil ». Ces languettes 34 présentent une extrémité amont supérieure 36 raccordée à la bride de fixation 30, et une extrémité amont inférieure 38 raccordée à la bague extérieure 18 du palier.

Dans cet exemple, la bague extérieure 18 est formée de deux parties coaxiales, à savoir un support annulaire 40 raccordé à l'extrémité amont inférieure 38 des languettes 34, et une piste de roulement 42 montée serrée dans le support annulaire 40. En variante, la bague extérieure 18 peut être réalisée d'un seul tenant.

La bague extérieure 18 présente une surface annulaire radialement externe 44 de forme globalement cylindrique de révolution, et pourvue de deux gorges 46 dans lesquelles sont logés respectivement deux segments annulaires d'étanchéité 48 délimitant axialement un espace annulaire 49 destiné à recevoir un film d'huile. Dans l'exemple illustré, les deux gorges 46 sont formées dans le support annulaire 40 de la bague extérieure 18 et sont disposées entre deux portées annulaires 50 de la bague extérieure, couramment appelées « portées de butée », au droit desquelles le jeu entre la bague extérieure 18 et la frette 28 définit la course radiale du palier souple. Ce jeu est inférieur à l'épaisseur du film d'huile mais suffisant pour conserver la fonction amortissante de celui-ci jusqu'à ce que le palier souple soit en butée sous effort radial.

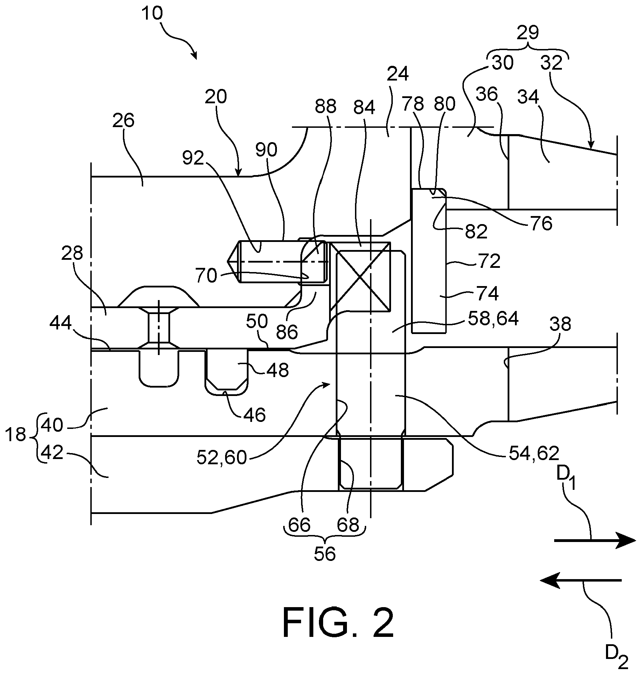

Dans cette solution de retenue axiale de la bague extérieure 18 du palier par rapport au support du palier 20, le dispositif 10 comporte des moyens de rétention pour retenir axialement la bague extérieure 18 en cas de rupture des moyens élastiquement déformables 32, en particulier en cas de rupture d'une ou plusieurs languettes 34, voire la totalité des languettes 34, qui sont mieux visibles sur la figure 2.

Ainsi, ces moyens de rétention comprennent des premiers moyens 52 distincts de la frette 28 et présentant une partie radialement interne 54 engagée dans au moins un évidement 56 formé dans la surface radialement externe 44 de la bague extérieure 18, et une partie radialement externe 58 s'étendant en saillie radialement vers l'extérieur par rapport à la surface radialement externe 44 de la bague extérieure 18.

Dans cet exemple, les premiers moyens 52 prennent la forme d'une rangée annulaire de pions de rétention 60 présentant chacun une partie radialement interne 62 montée serrée dans la bague extérieure 18, et une partie radialement externe 64 faisant saillie depuis la surface radialement externe 44 de la bague extérieure 18. Plus précisément, la partie radialement interne 62 de chaque pion de rétention 60 s'étend au travers d'un orifice 66 correspondant du support annulaire 40, et présente une extrémité radialement interne insérée dans un orifice correspondant 68 de la piste de roulement 42. Ceci permet de maintenir en place la piste de roulement 42 dans le support annulaire 40 même en cas de perte du serrage entre ces deux pièces. Chaque orifice 68 de la piste de roulement 42 présente un diamètre en section légèrement plus petit que le diamètre en section de l'orifice 66 correspondant du support annulaire 40, et la partie radialement interne 62 de chaque pion de rétention 60 présente un rétrécissement de sa section de manière à bloquer le pion de rétention 60 dans la direction radiale vers l'intérieur, pour empêcher le pion de rétention 60 de sortir de son logement en cas de perte du serrage entre le pion de rétention 60 et l'orifice 66, afin qu'il ne risque pas d'endommager le roulement.

Les parties radialement externes 64 respectives des pions de rétention 60 s'étendent dans un espace annulaire délimité par un épaulement 70 formé à la base de la bride annulaire 24 du support de palier.

Dans cet exemple, les moyens de rétention, formant un arrêt axial, comprennent en outre un anneau (ou rondelle) de rétention 72 distinct de la frette 28 et présentant une partie radialement interne 74 s'étendant à distance de la bague extérieure 18 et formant une butée s'opposant au déplacement axial de la partie radialement externe 58 des premiers moyens 52 vers l'amont, et une partie radialement externe 76 interposée axialement entre le support de palier 20 et la bride de fixation 30. Les pions de rétention 60 s'étendent ainsi axialement en regard de la partie radialement interne 74 de l'anneau de rétention 72.

Ainsi, il apparaît clairement qu'en cas de rupture des moyens élastiquement déformables 32, la bride de fixation 30 s'oppose à un déplacement axial de la partie radialement externe 58 des premiers moyens 52 dans une première direction D1, en l'occurrence orientée vers l'aval, tandis que la bride annulaire 24 du support de palier 20 s'oppose à un déplacement axial de la partie radialement externe 58 des premiers moyens 52 dans une seconde direction D2 opposée à la première direction D1, en l'occurrence orientée vers l'amont. Bien entendu, les directions précitées peuvent être inversées moyennant une inversion de la configuration du dispositif 10.

Par ailleurs, dans l'exemple illustré, l'anneau de rétention 72 présente une extrémité radialement externe 78 montée serrée dans un logement annulaire 80 de la bride de fixation 30 délimitée axialement par un épaulement annulaire 82 de la bride de fixation s'opposant à un déplacement axial de l'anneau de rétention 72 dans ladite première direction D1, en l'occurrence vers l'aval.

En outre, dans cet exemple, une rangée annulaire d'ergots 84 solidaires du support de palier 20 peut être agencée de sorte que la partie radialement externe 64 de chacun des pions de rétention 60 est positionnée entre deux des ergots 84. Dans l'exemple illustré, les ergots 84 forment l'extrémité d'une extension 86 vers l'aval de la frette 28. La coopération des ergots 84 avec les pions de rétention 60 permet ainsi de limiter la rotation de la bague extérieure 18 en cas de rupture des moyens élastiquement déformables 32.

De plus, l'extension 86 de la frette 28 comporte au moins un évidement 88 coopérant avec un pion détrompeur 90 monté serré dans un orifice 92 formé dans l'épaulement 70 du support de palier 20. Le pion détrompeur 90 permet d'indexer la position angulaire de la frette 28, et donc des ergots 84, par rapport au support de palier 20. De préférence, chaque pion détrompeur 90 est sensiblement aligné avec un des pions de rétention 60, qui l'empêche ainsi de sortir de son logement même en cas de perte du serrage avec l'orifice 92, afin qu'il ne puisse pas aller endommager le roulement. Par ailleurs, l'indexation angulaire des pions 60 par rapport au support de palier 20 est assurée par la mise en référence d'orifices 94 (voir figure 1) de la bride de fixation 30 appartenant aux moyens de raccordement 29 avec des orifices 96 (voir figure 1) de la bride annulaire 24 appartenant au support de palier 20. Certains des orifices 94 et 96 sont destinés au passage des boulons 31 tandis que d'autres de ces orifices peuvent être destinés au passage de canaux d'amenée de lubrifiant ou de canaux de ventilation, ou encore destinés à coopérer avec des outils pour faciliter la séparation des moyens de raccordement 29 et du support de palier 20 lors du démontage du dispositif 10.

Par ailleurs, la figure 3 illustre également, partiellement et en perspective, un autre exemple de dispositif 10 de centrage et de guidage en rotation d'un arbre 12 dans une turbomachine, lequel comporte deux rangées annulaires de languettes 34 en forme de U ouvert vers l'amont. La réalisation de ces languettes 34 sur deux niveaux impose de créer un arrêt axial, notamment par le biais de l'anneau de rétention 72, pour maintenir la fonction de roulement en cas de rupture de ces languettes 34 sous charge extrême.

Cette solution de l'art antérieur présente néanmoins des inconvénients. En effet, pour pouvoir réaliser un tel arrêt axial, il est nécessaire d'insérer la rondelle de rétention 72 montée serrée qui vient s'intégrer sous la bride 30 du palier. De plus, il faut percer et aléser plusieurs trous pour pouvoir fretter les pions 60 qui viendront au contact de la rondelle de rétention 72 en cas de rupture des languettes 34.

Ainsi, le montage d'un tel arrêt axial nécessite un usinage particulier et complexe du palier consistant à : réaliser un alésage précis pour assurer le frettage de la rondelle de rétention 72 ; réaliser un perçage et un alésage précis pour l'implantation des pions 60, cet usinage étant de plus réalisé sur des pièces finies, ce qui comporte un risque de rebut et peut introduire un effet de quadri-lobage mal maîtrisé dépendant de l'état de contrainte résiduelle de la bague 18 et du montage à force des pions 60.

De plus, le montage serré de la rondelle de rétention 72 a une influence sur le diamètre extérieur de la bride 30. Dans certaines conditions, il fait gonfler le diamètre de bride. La souplesse de la rondelle de rétention 72 constitue aussi une composante supplémentaire à prendre en compte dans la souplesse globale, donc dans les dispersions.

En outre, l'insertion des pions 60 sur des pièces finies impose aux opérateurs de prendre de grandes précautions pour ne pas endommager le roulement et le polluer, en raison notamment d'un risque d'arrachement de matière lors de l'insertion des pions 60.

### EXPOSÉ DE L'INVENTION

L'invention a donc pour but de remédier au moins partiellement aux besoins mentionnés ci-dessus et aux inconvénients relatifs aux réalisations de l'art antérieur.

Elle vise notamment à apporter une solution simple, économique et efficace à au moins une partie de ces problèmes, par déplacement de la fonction d'arrêt axial.

L'invention a ainsi pour objet, selon l'un de ses aspects, un dispositif pour le centrage et le guidage en rotation d'un arbre de turbomachine, comportant :
- un palier de roulement comprenant une bague extérieure,
- un support de palier entourant la bague extérieure,
- une frette interposée entre la bague extérieure et le support de palier,
- des moyens de raccordement de la bague extérieure au support de palier, les moyens de raccordement comprenant une bride de fixation annulaire montée sur le support de palier et des moyens élastiquement déformables reliant la bague extérieure à la bride de fixation, comprenant au moins une rangée annulaire de languettes en forme de U ouvert vers l'amont,
- des moyens de rétention pour retenir axialement la bague extérieure en cas de rupture desdits moyens élastiquement déformables,
caractérisé en ce que les moyens de rétention comportent au moins une bride d'arrêt axial s'étendant sur un secteur angulaire autour de l'axe de révolution de la bague extérieure, positionnée en aval et au contact de la bride de fixation, ladite au moins une bride d'arrêt axial comportant au moins un trou de fixation coopérant avec un orifice de la bride de fixation pour la fixation ensemble de la bride de fixation, du support de palier et de ladite au moins une bride d'arrêt axial par le biais d'un au moins un organe de fixation, ladite au moins une bride d'arrêt axial comprenant en outre au moins un ergot de maintien axial s'étendant radialement vers l'axe de révolution de la bague extérieure entre deux languettes successives des moyens élastiquement déformables.

Grâce à l'invention, le déplacement de la fonction d'arrêt axial sur l'aval de la bride de fixation permet de ne plus modifier l'intégrité géométrique du palier. L'axisymétrie du palier est améliorée. La suppression des trous formant les logements des pions de la solution de l'art antérieur décrite précédemment permet d'éviter les usinages supplémentaires à l'aval de la piste de roulement et d'éliminer les effets de proximité avec les usinages pour thermocouples dans le cas d'un roulement instrumenté. De plus, le premier risque de quadri-lobage de la pise de roulement est éliminé, de même que le deuxième risque de quadri-lobage dû au montage fretté des pions à force est aussi éliminé en faveur de la circularité de piste. En outre, l'usinage du palier est simplifié et les risques de rebuts sont éliminés. Le coût du palier est diminué.

Par ailleurs, la bride d'arrêt axial selon l'invention peut être usinée indépendamment du palier à moindre coût et elle n'est pas soumise à l'usure du palier. La masse de l'ensemble du dispositif n'est pas impactée. De même, la mise en place de la ou des brides d'arrêt axial n'interfère pas sur l'isostatisme du roulement. Cette ou ces brides d'arrêt axial peuvent être maintenues par les vis de fixation du palier.

En outre, la suppression de la rondelle de rétention de la solution de l'art antérieur permet d'éliminer une dispersion sur la souplesse radiale du système, donc une augmentation de la précision sur la valeur cible à respecter selon les spécifications. L'usinage du support de palier est également simplifié. Les ergots, ou doigts, de la ou des brides de fixation peuvent éventuellement servir de moyens d'anti-rotation. En définitif, en ajoutant une ou plusieurs brides d'arrêt axial, notamment trois, fixées par le biais des vis de fixation du palier, celles-ci libèrent complètement le roulement des contraintes liées à l'arrêt axial, ce qui n'est pas le rôle premier d'un palier.

Le dispositif selon l'invention peut en outre comporter l'une ou plusieurs des caractéristiques suivantes prises isolément ou suivant toutes combinaisons techniques possibles.

Le dispositif peut en particulier comporter une pluralité de brides d'arrêt axial réparties, régulièrement ou non, sur la bride de fixation autour de l'axe de révolution de la bague extérieure, notamment au moins trois brides d'arrêt axial.

Ladite au moins une bride d'arrêt axial peut particulièrement comporter une pluralité d'ergots, notamment au moins deux ergots espacés circonférentiellement et orientés vers l'axe de révolution de la bague extérieure.

De plus, ladite au moins une bride d'arrêt axial peut comporter une pluralité de trous de fixation, notamment au moins deux trous de fixation espacés circonférentiellement et situés chacun à une extrémité circonférentielle de ladite au moins une bride d'arrêt axial.

En outre, ladite au moins une bride d'arrêt axial peut comporter une portion centrale, notamment située entre deux ergots, évidée de sorte à diminuer la masse de ladite au moins une bride d'arrêt axial.

Ladite au moins une bride d'arrêt axial peut alors comporter, au niveau de la portion centrale évidée, au moins un trou de ventilation, notamment une pluralité de trous de ventilation, par exemple au moins quatre trous de ventilation.

Par ailleurs, l'extrémité radiale dudit au moins un ergot, située entre deux languettes successives, peut présenter un ou plusieurs détalonnages pour éviter tout risque de collision.

En outre, le jeu disponible entre un ergot et une languette adjacente à l'ergot peut être supérieur au déplacement radial de la bague extérieure.

Avantageusement, les moyens élastiquement déformables peuvent comprendre deux rangées annulaires de languettes.

L'invention a en outre pour objet, selon un autre de ses aspects, une turbomachine, caractérisée en ce qu'elle comporte au moins un dispositif tel que défini précédemment.

### BRÈVE DESCRIPTION DES DESSINS

L'invention pourra être mieux comprise à la lecture de la description détaillée qui va suivre, d'un exemple de mise en œuvre non limitatif de celle-ci, ainsi qu'à l'examen des figures, schématiques et partielles, du dessin annexé, sur lequel :
- la figure 1 est une demi-vue schématique en section axiale d'un exemple de dispositif pour le centrage et le guidage en rotation d'un arbre de turbomachine, selon l'art antérieur,
- la figure 2 est une vue à plus grande échelle du détail II de la figure 1,
- la figure 3 illustre, partiellement et en perspective, un autre exemple de dispositif pour le centrage et le guidage en rotation d'un arbre de turbomachine, selon l'art antérieur, comportant deux rangées annulaires de languettes,
- la figure 4 est une demi-vue schématique en section axiale d'un exemple de dispositif pour le centrage et le guidage en rotation d'un arbre de turbomachine, selon l'invention,
- la figure 5 illustre, partiellement et en perspective, un exemple de bride d'arrêt axial d'un dispositif selon l'invention, fixée à la bride de fixation et comprenant des ergots s'étendant entre les languettes du dispositif,
- la figure 6 illustre, de façon isolée et en perspective, la bride d'arrêt axial de la figure 5,
- la figure 7 représente, en vue de face, le dispositif de la figure 5 comprenant trois brides d'arrêt axial fixées sur la bride de fixation du dispositif, et
- la figure 8 est une vue agrandie, partielle et en perspective, du dispositif de la figure 5 permettant de mieux visualiser l'étendue des ergots entre les languettes du dispositif.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ D'UN MODE DE RÉALISATION PARTICULIER

Il est à noter que, dans toute la description, les directions « amont » et « aval » sont définies par rapport à un sens général d'écoulement des gaz parallèlement à un axe 13 de l'arbre 12 correspondant à un axe de la turbomachine, et les directions radiales « vers l'intérieur » et « vers l'extérieur » sont définies par rapport à l'axe 13.

Les figures 1 à 3 ont déjà été décrites dans la partie relative à l'état de la technique antérieure et au contexte technique de l'invention.

On va maintenant décrire, en référence aux figures 4 à 8, un exemple de dispositif 10 pour le centrage et le guidage en rotation d'un arbre 12 de turbomachine conforme à l'invention. Il est à noter que les éléments précédemment décrits en référence aux figures 1 à 3 dans la partie relative à l'art antérieur et au contexte technique de l'invention ne sont pas décrits de nouveau. Bien entendu, à l'exception des moyens de rétention spécifiques de l'art antérieur comprenant notamment un anneau de rétention 72 et des pions 60, l'ensemble des caractéristiques précédemment décrites en lien avec les figures 1 à 3 peuvent être incorporées à un dispositif 10 conforme à l'invention.

Ainsi, le dispositif 10 comporte un palier de roulement comprenant une bague extérieure 18, un support de palier 20 entourant la bague extérieure 18, une frette 28 interposée entre la bague extérieure 18 et le support de palier 20, et des moyens de raccordement 29 de la bague extérieure 18 au support de palier 20.

Ces moyens de raccordement 29 comprennent une bride de fixation 30 annulaire montée sur le support de palier 20 et des moyens élastiquement déformables 32 reliant la bague extérieure 18 à la bride de fixation 30, comprenant au moins une rangée annulaire de languettes 34 en forme de U ouvert vers l'amont.

De plus, le dispositif 10 comporte des moyens de rétention pour retenir axialement la bague extérieure 18 en cas de rupture des moyens élastiquement déformables 32.

Conformément à l'invention, ces moyens de rétention comportent une bride d'arrêt axial 100, ici trois brides d'arrêt axial réparties de manière non régulière autour de l'axe de révolution 13 de la bague extérieure 18.

Ces brides d'arrêt axial 100 s'étendent chacune sur un secteur angulaire autour de l'axe de révolution 13 de la bague extérieure 18.

Elles sont positionnées en aval et au contact de la bride de fixation 30. De plus, elles comportent chacune des trous de fixation 101 coopérant avec un orifice 102 de la bride de fixation 30 pour la fixation ensemble de la bride de fixation 30, du support de palier 20 et de la bride d'arrêt axial 100 par le biais d'une vis de fixation 31.

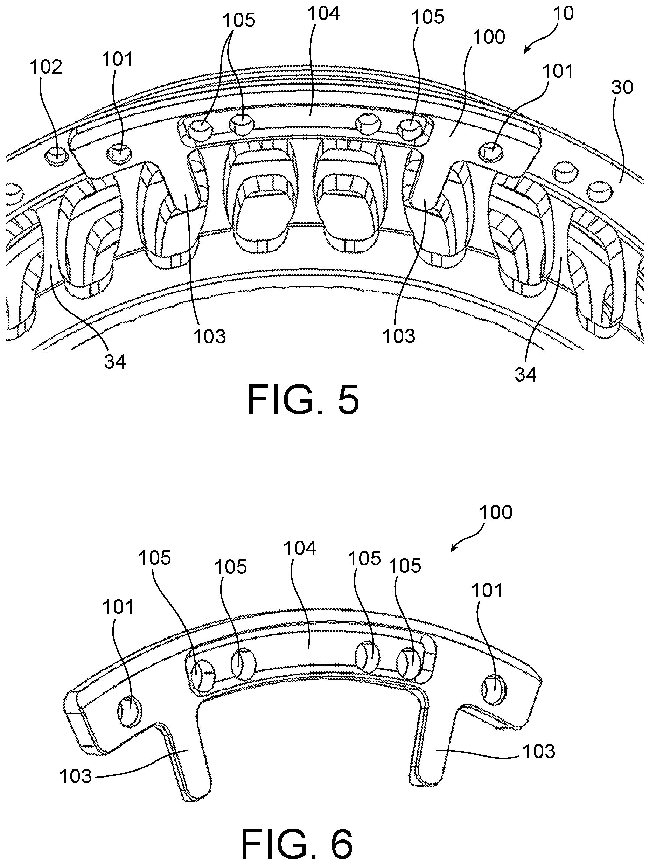

Plus précisément, chaque bride d'arrêt axial 100 comporte deux trous de fixation 101 espacés circonférentiellement et situés chacun à une extrémité circonférentielle de la bride d'arrêt axial 100, comme visible notamment sur la figure 6.

En outre, chaque bride d'arrêt axial 100 comporte des ergots 103 (ou doigts), ici deux ergots 103 pour chaque bride 100, s'étendant radialement vers l'axe de révolution 13 de la bague extérieure 18 entre deux languettes 34 successives des moyens élastiquement déformables 32, comme visible notamment sur les figures 5 et 6.

Par ailleurs, chaque bride d'arrêt axial 100, comme le montre notamment la figure 6, comporte une portion centrale 104 formant une poche d'allègement, située entre les deux ergots 103, qui est évidée de manière non traversante de sorte à diminuer la masse de la bride d'arrêt axial 100. Au niveau de cette portion centrale 104 évidée, une pluralité de trous de ventilation 105, par exemple quatre trous de ventilation 105 dans cet exemple, sont formés.

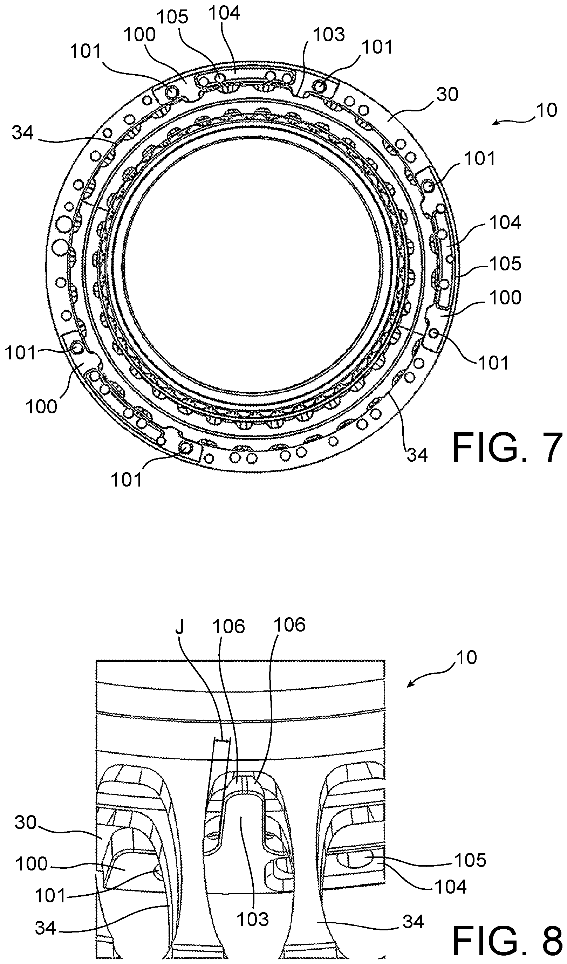

De plus, comme visible notamment sur la figure 8, l'extrémité radiale de chaque ergot 103, située entre deux languettes 34 successives, présente des détalonnages 106 réalisés de sorte à éviter tout risque de collision.

Il faut en outre noter que, comme illustré sur la figure 8, le jeu J disponible entre un ergot 103 et une languette 34 adjacente à l'ergot 103 est avantageusement supérieur au déplacement radial de la bague extérieure 18 pour des raisons d'optimisation d'absorption.

En conséquence, le déplacement de la fonction d'arrêt axial sur l'aval de la bride de fixation 30, proposé par l'invention par le biais de l'utilisation de brides d'arrêt axial 100, permet d'optimiser le fonctionnement du palier et de répondre au moins en partie aux problématiques soulevées précédemment au vu de l'art antérieur.

## Revendications

1. Dispositif (10) pour le centrage et le guidage en rotation d'un arbre (12) de turbomachine, comportant :
- un palier de roulement comprenant une bague extérieure (18),
- un support de palier (20) entourant la bague extérieure (18),
- une frette (28) interposée entre la bague extérieure (18) et le support de palier (20),
- des moyens de raccordement (29) de la bague extérieure (18) au support de palier (20), les moyens de raccordement (29) comprenant une bride de fixation (30) annulaire montée sur le support de palier (20) et des moyens élastiquement déformables (32) reliant la bague extérieure (18) à la bride de fixation (30), comprenant au moins une rangée annulaire de languettes (34) en forme de U ouvert vers l'amont,
- des moyens de rétention pour retenir axialement la bague extérieure (18) en cas de rupture desdits moyens élastiquement déformables (32),
**caractérisé en ce que** les moyens de rétention comportent au moins une bride d'arrêt axial (100) s'étendant sur un secteur angulaire autour de l'axe de révolution (13) de la bague extérieure (18), positionnée en aval et au contact de la bride de fixation (30), ladite au moins une bride d'arrêt axial (100) comportant au moins un trou de fixation (101) coopérant avec un orifice (102) de la bride de fixation (30) pour la fixation ensemble de la bride de fixation (30), du support de palier (20) et de ladite au moins une bride d'arrêt axial (100) par le biais d'un au moins un organe de fixation (31), ladite au moins une bride d'arrêt axial (100) comprenant en outre au moins un ergot (103) de maintien axial s'étendant radialement vers l'axe de révolution (13) de la bague extérieure (18) entre deux languettes (34) successives des moyens élastiquement déformables (32).

2. Dispositif selon la revendication 1, **caractérisé en ce qu'**il comporte une pluralité de brides d'arrêt axial (100) réparties sur la bride de fixation (30) autour de l'axe de révolution (13) de la bague extérieure (18), notamment au moins trois brides d'arrêt axial (100).

3. Dispositif selon la revendication 1 ou 2, **caractérisé en ce que** ladite au moins une bride d'arrêt axial (100) comporte une pluralité d'ergots (103), notamment au moins deux ergots (103) espacés circonférentiellement et orientés vers l'axe de révolution (13) de la bague extérieure (18).

4. Dispositif selon l'une des revendications précédentes, **caractérisé en ce que** ladite au moins une bride d'arrêt axial (100) comporte une pluralité de trous de fixation (101), notamment au moins deux trous de fixation (101) espacés circonférentiellement et situés chacun à une extrémité circonférentielle de ladite au moins une bride d'arrêt axial (100).

5. Dispositif selon l'une quelconque des revendications précédentes, **caractérisé en ce que** ladite au moins une bride d'arrêt axial (100) comporte une portion centrale (104), notamment située entre deux ergots (103), évidée de sorte à diminuer la masse de ladite au moins une bride d'arrêt axial (100).

6. Dispositif selon la revendication 5, **caractérisé en ce que** ladite au moins une bride d'arrêt axial (100) comporte, au niveau de la portion centrale (104) évidée, au moins un trou de ventilation (105), notamment une pluralité de trous de ventilation (105), par exemple au moins quatre trous de ventilation (105).

7. Dispositif selon l'une quelconque des revendications précédentes, **caractérisé en ce que** l'extrémité radiale dudit au moins un ergot (103), située entre deux languettes (34) successives, présente un ou plusieurs détalonnages (106) pour éviter tout risque de collision.

8. Dispositif selon l'une quelconque des revendications précédentes, **caractérisé en ce que** le jeu (J) disponible entre un ergot (103) et une languette (34) adjacente à l'ergot (103) est supérieur au déplacement radial de la bague extérieure (18).

9. Dispositif selon l'une quelconque des revendications précédentes, **caractérisé en ce que** les moyens élastiquement déformables (32) comprennent deux rangées annulaires de languettes (34).

10. Turbomachine, **caractérisée en ce qu'**elle comporte au moins un dispositif (10) selon l'une quelconque des revendications précédentes.

## Patentansprüche

1. Vorrichtung (10) zum Zentrieren und Drehführen einer Turbomaschinenwelle (12), mit:
- einem Wälzlager, das einen Außenring (18) aufweist,
- einem Lagerträger (20), der den Außenring (18) umgibt,
- einem Schrumpfring (28), der zwischen dem Außenring (18) und dem Lagerträger (20) angeordnet ist,
- Verbindungsmitteln (29) des Außenrings (18) mit dem Lagerträger (20), wobei die Verbindungsmittel (29) einen auf dem Lagerträger (20) angebrachten, ringförmigen Befestigungsflansch (30) und elastisch verformbare Mittel (32) aufweisen, die den Außenring (18) mit dem Befestigungsflansch (30) verbinden, mit mindestens einer ringförmigen Anordnung von Zungen (34) in einer stromaufwärts offenen U-Form,
- Rückhaltemitteln, um den Außenring (18) im Fall des Zerreißens der elastisch verformbaren Mittel (32) axial zurückzuhalten,
**dadurch gekennzeichnet, dass** die Rückhaltemittel mindestens einen axialen Anschlagsflansch (100) umfassen, der sich auf einem Winkelabschnitt um die Drehachse (13) des Außenrings (18) herum erstreckt und der stromabwärts und in Anlage mit dem Befestigungsflansch (30) positioniert ist, wobei der mindestens eine axiale Anschlagsflansch (100) mindestens eine Befestigungsbohrung (101) aufweist, welche mit einer Öffnung (102) des Befestigungsflansches (30) zur gemeinsamen Befestigung des Befestigungsflansches (30), des Lagerträgers (20) sowie des mindestens einen axial Anschlagsflansches (100) über die Vorspannung von mindestens einem Befestigungselement (31) zusammenwirkt, wobei der mindestens eine axiale Anschlagsflansch (100) außerdem mindestens einen axialen Haltevorsprung (103) aufweist, der sich radial in Richtung der Drehachse (13) des Außenrings (18) zwischen zwei aufeinanderfolgenden Zungen (34) der elastisch verformbaren Mittel (32) erstreckt.

2. Vorrichtung nach Anspruch 1, **dadurch gekennzeichnet, dass** sie eine Mehrzahl von axialen Anschlagsflanschen (100), die auf dem Befestigungsflansch (30) um die Drehachse (13) des Außenrings (18) herum verteilt sind, insbesondere mindestens drei axiale Anschlagsflansche (100), umfasst.

3. Vorrichtung nach Anspruch 1 oder 2, **dadurch gekennzeichnet, dass** der mindestens eine axiale Anschlagsflansch (100) eine Mehrzahl von Vorsprüngen (103), insbesondere mindestens zwei Vorsprünge (103) umfasst, die in Umfangsrichtung beabstandet und in Richtung der Drehachse (13) des Außenrings (18) ausgerichtet sind.

4. Vorrichtung nach einem der vorhergehenden Ansprüche, **dadurch gekennzeichnet, dass** der mindestens eine axiale Anschlagsflansch (100) eine Mehrzahl von Befestigungsbohrungen (101), insbesondere mindestens zwei Befestigungsbohrungen (101) umfasst, die in Umfangsrichtung beabstandet sind und sich jeweils an einem umlaufenden Endteil des mindestens einen axialen Anschlagsflansches (100) befinden.

5. Vorrichtung nach einem der vorhergehenden Ansprüche, **dadurch gekennzeichnet, dass** der mindestens eine axiale Anschlagsflansch (100) einen mittleren Abschnitt (104) aufweist, der sich insbesondere zwischen zwei Vorsprüngen (103) befindet und durchbrochen ist, um die Masse des mindestens einen axialen Anschlagsflansches (100) zu verringern.

6. Vorrichtung nach Anspruch 5, **dadurch gekennzeichnet, dass** der mindestens eine axiale Anschlagsflansch (100) auf der Höhe des durchbrochenen mittleren Abschnitts (104) mindestens eine Belüftungsöffnung (105), insbesondere eine Mehrzahl von Belüftungsöffnungen (105), beispielsweise mindestens vier Belüftungsöffnungen (105), aufweist.

7. Vorrichtung nach einem der vorhergehenden Ansprüche, **dadurch gekennzeichnet, dass** das radiale Ende des mindestens einen Vorsprungs (103), das sich zwischen zwei aufeinanderfolgenden Zungen (34) befindet, eine oder mehrere Hinterschneidungen (106) zur Vermeidung jeglicher Kollisionsgefahr aufweist.

8. Vorrichtung nach einem der vorhergehenden Ansprüche, **dadurch gekennzeichnet, dass** das zwischen einem Vorsprung (103) und einer an den Vorsprung (103) angrenzenden Zunge (34) verfügbare Spiel (J) größer als die radiale Verlagerung des Außenrings (18) ist.

9. Vorrichtung nach einem der vorhergehenden Ansprüche, **dadurch gekennzeichnet, dass** die elastisch verformbaren Mittel (32) zwei ringförmige Anordnungen von Zungen (34) aufweisen.

10. Turbomaschine, **dadurch gekennzeichnet, dass** sie mindestens eine Vorrichtung (10) nach einem der vorhergehenden Ansprüche umfasst.

## Claims

1. A device (10) for centring and rotatably guiding a shaft (12) of a turbomachine, including:
- a rolling bearing comprising an outer ring (18),
- a bearing support (20) surrounding the outer ring (18),
- a shrink ring (28) interposed between the outer ring (18) and the bearing support (20),
- connection means (29) for connecting the outer ring (18) to the bearing support (20), the connection means (29) comprising an annular fastening clamp (30) mounted to the bearing support (20) and elastically deformable means (32) linking the outer ring (18) to the fastening clamp (30), comprising at least one annular row of upstream opened U-shaped tabs (34),
- retaining means for axially retaining the outer ring (18) in case of rupture of said elastically deformable means (32),
**characterised in that** the retaining means include at least one axial stop clamp (100) extending on an angular sector about the axis of revolution (13) of the outer ring (18), positioned downstream and in contact with the fastening clamp (30), said at least one axial stop clamp (100) including at least one fastening hole (101) cooperating with a port (102) of the fastening clamp (30) for fastening together the fastening clamp (30), the bearing support (20) and said at least one axial stop clamp (100) through at least one fastening member (31), said at least one axial stop clamp (100) further comprising at least one axial holding stud (103) radially extending to the axis of revolution (13) of the outer ring (18) between two successive tabs (34) of the elastically deformable means (32).

2. The device according to claim 1, **characterised in that** it includes a plurality of axial stop clamps (100) distributed on the fastening clamp (30) about the axis of revolution (13) of the outer ring (18), in particular at least three axial stop clamps (100).

3. The device according to claim 1 or 2, **characterised in that** said at least one axial stop clamp (100) includes a plurality of studs (103), in particular at least two studs (103) circumferentially spaced apart and oriented to the axis of revolution (13) of the outer ring (18).

4. The device according to one of the preceding claims, **characterised in that** said at least one axial stop clamp (100) includes a plurality of fastening holes (101), in particular at least two fastening holes (101) circumferentially spaced apart and each located at a circumferential end of said at least one axial stop clamp (100).

5. The device according to any of the preceding claims, **characterised in that** said at least one axial stop clamp (100) includes a central portion (104), in particular located between two studs (103), recessed so as to decrease the mass of said at least one axial stop clamp (100).

6. The device according to claim 5, **characterised in that** said at least one axial stop clamp (100) includes, at the recessed central portion (104), at least one ventilation hole (105), in particular a plurality of ventilation holes (105), for example at least four ventilation holes (105).

7. The device according to any of the preceding claims, **characterised in that** the radial end of said at least one stud (103), located between two successive tabs (34), has one or more relief ground parts (106) to avoid any collision risk.

8. The device according to any of the preceding claims, **characterised in that** the play (J) available between a stud (103) and a tab (34) adjacent to the stud (103) is higher than the radial displacement of the outer ring (18).

9. The device according to any of the preceding claims, **characterised in that** the elastically deformable means (32) include two annular rows of tabs (34).

10. A turbomachine, **characterised in that** it includes at least one device (10) according to any of the preceding claims.
